# EUROPÄISCHE PATENTSCHRIFT

(11) **EP 3 010 696 B1**
(45) Veröffentlichungstag und Bekanntmachung des Hinweises auf die Patenterteilung: **30.12.2020**
(21) Anmeldenummer: 14739671.7
(22) Anmeldetag: 20.06.2014
(51) Int. Cl.: B29C 49/16, B29C 49/06, B29C 49/14, B29C 49/46, B29C 49/58

(54) **VERFAHREN ZUM HERSTELLEN VON MIT EINEM FLÜSSIGEN FÜLLGUT GEFÜLLTEN BEHÄLTERN AUS VORFORMLINGEN AUS EINEM THERMOPLASTISCHEN MATERIA**
METHOD FOR PRODUCING CONTAINERS FILLED WITH A LIQUID FILLING MATERIAL FROM BLANKS MADE OF A THERMOPLASTIC MATERIAL
PROCÉDÉ PERMETTANT DE PRODUIRE DES CONTENANTS REMPLIS D'UNE MATIÈRE DE REMPLISSAGE LIQUIDE À PARTIR D'ÉBAUCHES EN MATIÈRE THERMOPLASTIQUE

(30) Priorität: 20.06.2013 DE 102013010207; 18.02.2014 DE 102014002052
(43) Veröffentlichungstag der Anmeldung: 27.04.2016
(73) Patentinhaber: KHS Corpoplast GmbH, 22145 Hamburg (DE)
(72) Erfinder: HAESENDONCK, Frank, 22145 Hamburg (DE); KLATT, Dieter, 22147 Hamburg (DE)
(74) Vertreter: Meissner Bolte Partnerschaft mbB
(86) Internationale Anmeldenummer: PCT/EP2014/001681
(87) Internationale Veröffentlichungsnummer: WO 2014/202224

(56) Entgegenhaltungen:
- WO-A1-99/50047
- WO-A1-2012/156014
- DE-A1-102008 050 027
- DE-U1-202008 005 393
- US-A- 4 058 870
- US-A- 5 052 626
- US-A- 5 622 735
- US-A1- 2002 171 161
- US-A1- 2010 090 025
- US-A1- 2012 299 224

## Beschreibung

Die vorliegende Erfindung betrifft ein Verfahren zum Herstellen von mit einem flüssigen Füllgut gefüllten Behältern aus Vorformlingen aus einem thermoplastischen Material nach dem Oberbegriff von Anspruch 1.

Aus dem Stand der Technik sind Verfahren bekannt, bei denen ein Behälter, insbesondere eine Flasche, aus einem Vorformling aus Kunststoff hergestellt wird. Hierzu wird der Rohling zumindest thermisch konditioniert und anschließend während einer Umformphase in einer Form durch ein in den Vorformling einleitbares flüssiges Druckmedium hydraulisch unter axialem und radialem Strecken in den Behälter umgeformt. Ein solcher Stand der Technik ist in der WO 2012/156014 A1 gezeigt.

In den meisten bekannten Verfahren wird für das axiale Strecken ein sogenannter Reckstab eingesetzt, der durch die Mündung des Vorformlings, die später die Behälteröffnung darstellt, in den Vorformling eingeführt wird. Mit dem Reckstab wird eine mechanische Kraft auf den Boden des Vorformlings ausgeübt, so dass der thermisch konditionierte Vorformling axial gestreckt wird. Die größte Kraft ist dabei erforderlich, um den Streckvorgang einzuleiten. Es ist wichtig, das axiale Strecken kontrolliert in die Wege zu leiten, damit sich der zukünftige Behälter gleichmäßig formt und die Wandstärke die gewünschten Werte erreicht. In der nicht gattungsgemäßen WO 99/50047 A1 ist für die blasformende Herstellung von Behältern aus Vorformlingen unter Verwendung eines Druckgases eine Axialreckung ohne Verwendung einer Reckstange beschrieben. Das Druckgas wird gegen den erwärmten Vorformlingsboden gerichtet und soll die Axialreckung bewirken, z.B. unterstützt durch ein außen am Vorformling angreifendes Führungselement.

Die Verwendung eines Reckstabs bei der hydraulischen Formung mit flüssigem Füllgut hat aber den Nachteil, dass der Reckstab in das Füllgut eingetaucht werden muss und beim Entfernen aus dem gefüllten Behälter immer Füllgut am Reckstab verbleibt, das die Abfüllmaschine oder die Behälteraußenseiten verunreinigen kann. Insbesondere bei zuckerhaltigen Flüssigkeiten oder der teilweisen Behälterfüllung mit Sirup führt dies zu Verunreinigungen, die vermieden werden müssen.

Aus der DE 10 2011 015 666 A1 ist ein Verfahren bekannt, bei dem eine Führungs- und Formeinrichtung während der Streckung von außen an dem Vorformling angreift. Dabei ist es schwierig, die zum Einleiten der Streckung erforderlichen Zugkräfte auf den Vorformling zu übertragen, so dass diese Kräfte in erster Linie von Innen durch Druckeinwirkung des einströmenden Füllguts aufgebracht werden müssen. Dabei kann aber nicht zwischen axial und radial wirkender Kraft differenziert werden, so dass die Einleitung der axialen Streckung problematisch ist.

Die Aufgabe der Erfindung ist es, ein Verfahren zum kontrollierten und/oder gesteuerten Umformen eines Vorformlings in einen Behälter vorzustellen, bei dem eine Verunreinigung der Behälteraußenseite oder der Abfüllmaschine durch verspritztes Füllgut vom Reckstab vermieden wird.

Zur Lösung der Aufgabe wird ein Verfahren zum Herstellen von mit einem flüssigen Füllgut gefüllten Behältern aus Vorformlingen aus einem thermoplastischen Material vorgeschlagen, wobei der jeweilige Vorformling zumindest thermisch konditioniert und anschließend während einer Umformphase in einer Form durch mittels einer Düse unter Druck in den Vorformling eingeleitetes flüssiges Füllgut unter axialem und radialem Strecken in den Behälter umgeformt wird, das dadurch gekennzeichnet ist, dass die axiale Streckung durch dem Vorformling impulsartig zugeführtes Füllgut eingeleitet wird.

Unter axialer Richtung soll im Zusammenhang dieser Anmeldung die Richtung rechtwinklig zur Mündung des Vorformlings verstanden werden. Üblicherweise wird der Vorformling in dieser Richtung seine größte Länge aufweisen und mit Ausnahme eventueller Gewindegänge um seine Mündung herum eine Symmetrieachse aufweisen. Mit radialer Richtung soll jede hierzu rechtwinklig stehende Richtung verstanden werden.

Erfindungsgemäß wird das flüssige Medium einem thermisch vorkonditionierten Vorformling impulsartig zugeführt, so dass der axiale Streckvorgang eingeleitet wird. Unter impulsartiger Zuführung des Druckmediums ist eine Zuführung zu verstehen, die unmittelbar in den leeren Vorformling erfolgt und deren Strahldurchmesser und Zuführgeschwindigkeit dazu geeignet sind, beim Auftreffen auf den Vorformling einen Impuls zu übertragen und damit den Streckvorgang auszulösen.

Die Zuführung des Füllguts erfolgt vorzugsweise in axialer Richtung des Vorformlings, so dass der volle Impuls des im Vorformling auftreffenden Füllgutstrahls für die axiale Streckung zur Verfügung steht.

Der Durchmesser und die Geschwindigkeit des Füllgutstrahls richten sich nach der für das Einleiten der Streckung des Vorformlings erforderlichen Kraft und hängen somit vom verwendeten Material, der Geometrie des Vorformlings und außerdem der thermischen Konditionierung ab.

Der durch den im Vorformling auftreffenden Füllgutstrahl übertragene Impuls ersetzt somit die Reckstange. Der Strahl trifft vorzugsweise gezielt auf den Zentralbereich des Bodens des Vorformlings. Übliche Vorformlinge weisen in diesem Bereich eine gerundete Kuppe auf. Der größte Bereich des Strahls sollte vorzugsweise in dem Bereich der Kuppe auftreffen, die zur Strahlrichtung annähernd rechtwinklig steht, damit ein möglichst großer Impuls in axialer Richtung übertragen werden kann.

Bei der Verwendung einer Reckstange gemäß dem Stand der Technik liegen übliche Streckkräfte zwischen 400 N und 600 N. Um vergleichbare Werte zwischen 350 N und 650 N mit einem Füllgutstrahl zu erreichen, muss der Strahldurchmesser zwischen 3 und 20 mm und die Strömungsgeschwindigkeit zwischen 30 und 100 m/s liegen. Die genauen Werte hängen auch von dem verwendeten Füllgut ab.

Die Zuführgeschwindigkeit und/oder der Strahldurchmesser können im Laufe des Füll- und Formvorgangs verändert werden. Insbesondere kann der Füll- und Formvorgang mit einer hohen Zuführgeschwindigkeit begonnen werden, um einen großen Impuls für die Einleitung des Streckvorgangs zu erreichen. Im Laufe des Füll- und Formvorgangs kann die Zuführgeschwindigkeit dann verringert werden, um eine kontrollierte axiale und radiale Formung des Behälters zu ermöglichen. Ebenso kann der Strahldurchmesser des Füllguts im Laufe des Füll- und Formvorgangs verändert werden. Der Strahldurchmesser kann z. B. bei hoher Zuführgeschwindigkeit zunächst klein gewählt werden, um einen hohen axialen Impulsübertrag im Zentralbereich des Bodens des Vorformlings zu erreichen, und kann anschließend vergrößert werden, um eine hohe Füllrate zu erreichen. Umgekehrt kann auch zunächst ein sehr breiter Strahl in den Vorformling einstömen, um einen hohen Massestrom zum Impulsübertrag zur Verfügung zu stellen, der dann für den weiteren Füllvorgang verkleinert wird.

Die axiale Streckung des Vorformlings kann durch eine von außen am Vorformling angreifende Führungseinrichtung geführt werden. Die Führungseinrichtung kann den Vorformling insbesondere teilweise umschließen oder am Vorformling greifend angeordnet sein. Der axiale Streckvorgang kann dadurch gesteuert erfolgen und der Druck des in den Vorformling einströmenden Füllguts für die axiale oder radiale Streckung eingesetzt werden. Hierfür kann die axiale Streckgeschwindigkeit des Vorformlings zumindest zeitweise begrenzt werden.

Denkbar ist z. B. ein Verfahrensablauf, bei dem durch das impulsartig einströmende Füllgut ein hoher Anfangsimpuls auf den Vorformling übertragen und der Streckvorgang damit ausgelöst wird. Nach einer ersten axialen Streckung begrenzt die Führungseinrichtung die Geschwindigkeit der axialen Streckung und führt den sich umformenden Vorformling gleichzeitig, um eine symmetrische Ausformung des Behälters sicherzustellen. Der Druck des in den Vorformling einströmenden Füllguts kann dann je nach Grad der Begrenzung der axialen Streckung mehr oder weniger stark in die radiale Streckung umgewandelt werden.

Umgekehrt ist auch eine Unterstützung der axialen Streckung durch die Führungseinrichtung möglich. Hierfür ist die Führungseinrichtung vorzugsweise greifend am Vorformling angeordnet und kann Zugkräfte in axialer Richtung auf den Vorformling übertragen.

Gemäß einer Ausführungsform der vorliegenden Erfindung kann die Düse während des Formvorgangs axial verfahren werden. Vorteilhaft wird der Abstand zwischen dem Boden des Vorformlings und der Düse dabei gesteuert, insbesondere derart, dass zumindest zeitweise ein definierter Abstand eingehalten wird, z.B. ein bestimmter Mindest- oder ein bestimmter Höchstabstand vom sich während des Formprozesses in axialer Richtung bewegenden Bodens des Vorformlings. Dadurch kann ein präziser und kontrollierter Impulsübertrag zum Vorformling erreicht und der Reckvorgang präzise gesteuert werden. Die Lage des Bodens des Vorformlings kann dabei während des Formprozesses insbesondere induktiv, durch Ultraschall oder durch Aufnahme des Wärmeprofils erfasst werden.

Die Position der Düse während des Formvorgangs kann auch anhand von Druckwerten gesteuert werden, die während des Formvorgangs erfasst werden, insbesondere dem Druck des Füllguts, dem Druck in einer Abluftleitung oder dem Druck in einer Rückstromleitung, durch die ein Teilstrom des Füllguts als Messstrom zurückgeführt wird.

Die Temperatur des Füllguts kann während des Form- und Füllvorgangs gesteuert werden, wobei das Füllgut insbesondere geheizt werden kann. Durch Beeinflussung der Temperatur des bereits vor Beginn des Formprozesses thermisch konditionierten Vorformlings kann der Streckprozess beeinflusst und gesteuert werden. Durch hohe Füllguttemperaturen verformt sich der Vorformling leichter. Durch eine Veränderung der Füllguttemperatur während des Prozesses können bestimmte Abschnitte des Vorformlings stärker oder weniger stark gestreckt werden.

Zur Vermeidung des seitlichen Ausweichens der Düse während des Formprozesses, insbesondere bei einer axial verschiebbaren Düse, kann die Düse während des Formprozesses wenigstens zeitweise radial abgestützt werden. Das kann durch seitliche Führungselemente an der Düse oder im Bereich der Düse geschehen, die sich seitlich in radialer Richtung an der Oberfläche des Vorformlings abstützen. Insbesondere kann die Abstützung durch seitlich in radialer Richtung aus der Düse austretende Füllgutstrahlen erfolgen, die durch die resultierenden Kräfte des ausströmenden Füllguts eine Stabilisierung der Düse in axialer Richtung herbeiführen. Hierfür können an der Düse seitliche Öffnungen für Nebenstahlen vorgesehen sein, z.B., als einzelne Öffnungen oder in Form eines Ringspalts.

Die Querschnittsfläche des Düsenkopfes kann annähernd der inneren Querschnittsfläche des Vorformlings entsprechen. Dadurch entsteht zu Beginn des Formprozesses ein Flüssigkeitspolster, das einen besonders guten Impulsübertrag zwischen einströmender Flüssigkeit und Vorformling ermöglicht und den Streckvorgang in axialer Richtung auslöst.

Ein Ausführungsbeispiel der Erfindung wird im Folgenden anhand der beigefügten Abbildungen näher erläutert, die Folgendes darstellen:
**Fig. 1** zeigt einen Vorformling in einer Form;
**Fig. 2** zeigt einen Vorformling in der Phase der Einleitung der Streckung durch einen Impulsstrahl;
**Fig. 3** zeigt einen sich aus einem Vorformling ausformenden Behälter;
**Fig. 4** zeigt einen Vorformling in der Phase der Einleitung der Streckung durch einen Impulsstrahl mit mitfahrender Düse;
**Fig. 5** zeigt einen Vorformling in einer Form mit einer bevorzugten Ausführungsform des Düsenkopfes;
**Fig. 6** zeigt den Vorformling aus Fig. 5 in der Phase der Einleitung der Streckung.

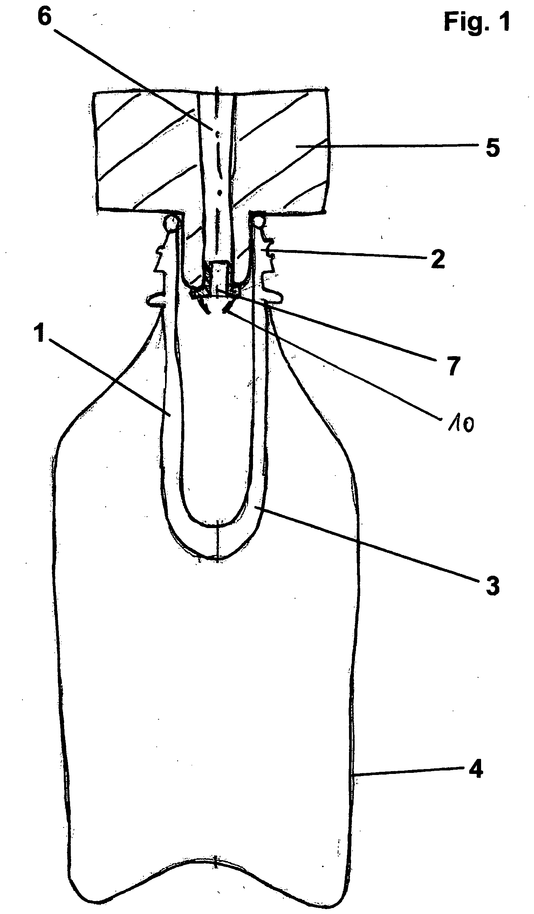

In **Figur 1** ist ein Vorformling **1** dargestellt, der über eine Mündung **2** und einen rotationssymmetrischen Körper **3** verfügt. Der Vorformling **1** befindet sich in einer Form **4.** In einer nicht dargestellten Abfüllmaschine soll der Vorformling **1** hydraulisch durch Einleitung eines flüssigen Füllguts geformt und gleichzeitig gefüllt werden.

Hierzu wird auf die Mündung **2** des Vorformlings **1** der Füllkopf **5** einer Abfüllmaschine dichtend aufgesetzt. Der Füllkopf **5** ist mit einer Zuleitung **6** für das flüssige Füllgut versehen, die durch ein Drosselventil **7** geöffnet und geschlossen werden kann, so dass das Füllgut durch eine Düse **10** in den Innenraum des Vorformlings **1** geleitet werden kann.

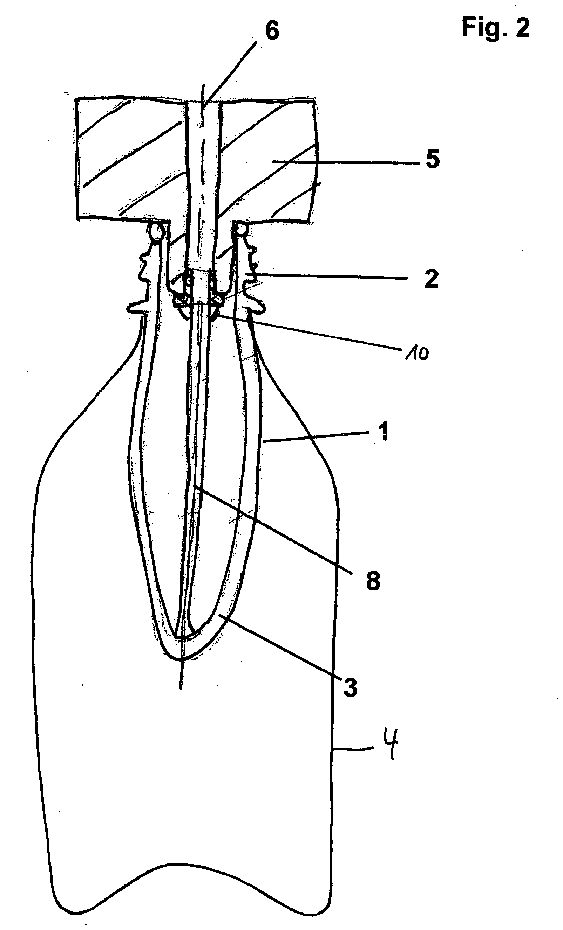

Der Form- und Füllvorgang des Behälters wird dann, wie in **Figur 2** dargestellt, durch einen Impulsstrahl des Füllguts **8** eingeleitet. Das Füllgut **8** wird mit hoher Geschwindigkeit in den Vorformling **1** eingeleitet. Dadurch wird der Vorformling **1** axial gereckt. Durch weiter einströmendes Füllgut **8** erfolgt die Formung des Behälters innerhalb der Form **4.**

Der Impulsstrahl ersetzt dabei den Reckstab. Der Strahldurchmesser ist so bemessen, dass der Strahl im Wesentlichen auf den Zentralbereich des Bodens des Vorformlings auftrifft und einen Impuls in axialer Richtung des Vorformlings überträgt.

Bei Verwendung von üblichen Vorformlingen ist eine Kraft von 400 - 600 N für die Einleitung der Streckung erforderlich. Im dargestellten Ausführungsbeispiel wird als Füllgut 8 Wasser verwendet. Der Strahl übt auf den Boden des Vorformlings eine Streckkraft aus, die von der Masse und der Geschwindigkeit des Strahls abhängt. Die Masse des Strahls kann durch den Durchmesser beeinflusst werden. Die ausgeübte Reckkraft lässt sich also über den Strahldurchmesser und die Strahlgeschwindigkeit steuern. Bei einem Strahl mit 10 mm Durchmesser ergibt sich bei einer Strahlgeschwindigkeit von 70 m/s eine Streckkraft von 385 N, bei 90 m/s von 635 N nach der Formel: $F = Dichte \times Strahlquerschnitt \times {Zuführgeschwindigkeit}^{2}$

In der in Figur 2 dargestellten Prozessphase hat der Vorformling 1 eine erste sowohl axiale als auch radiale Streckung erfahren.

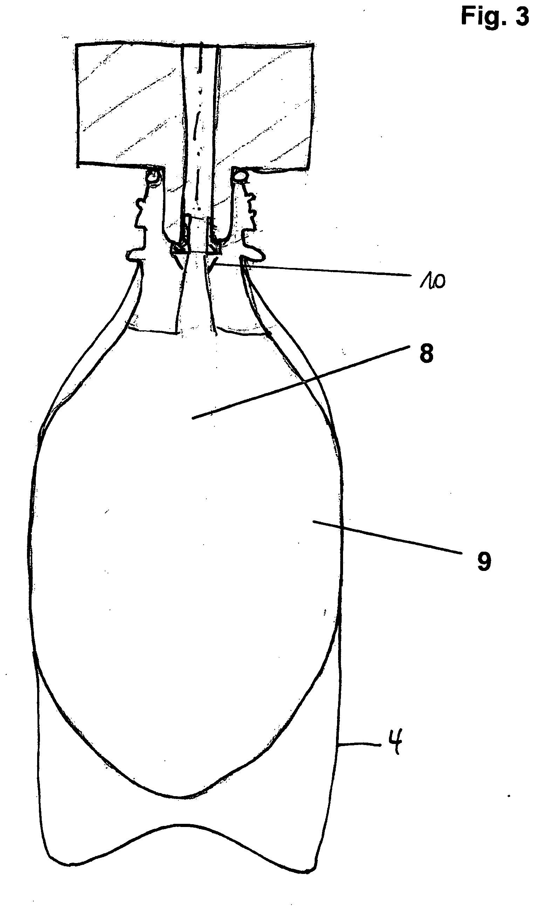

In **Figur 3** ist die Formung des Behälters **9** weiter fortgeschritten. Die axiale und radiale Streckung erfolgt hydraulisch durch Druckwirkung des unter Druck zugeführten Füllguts **8,** wobei der Behälter **9** sich mit zunehmendem Füllgrad im Umfang dehnt. Im Laufe des Füllvorgangs kann die Zuführgeschwindigkeit des Füllguts verändert und insbesondere verringert werden.

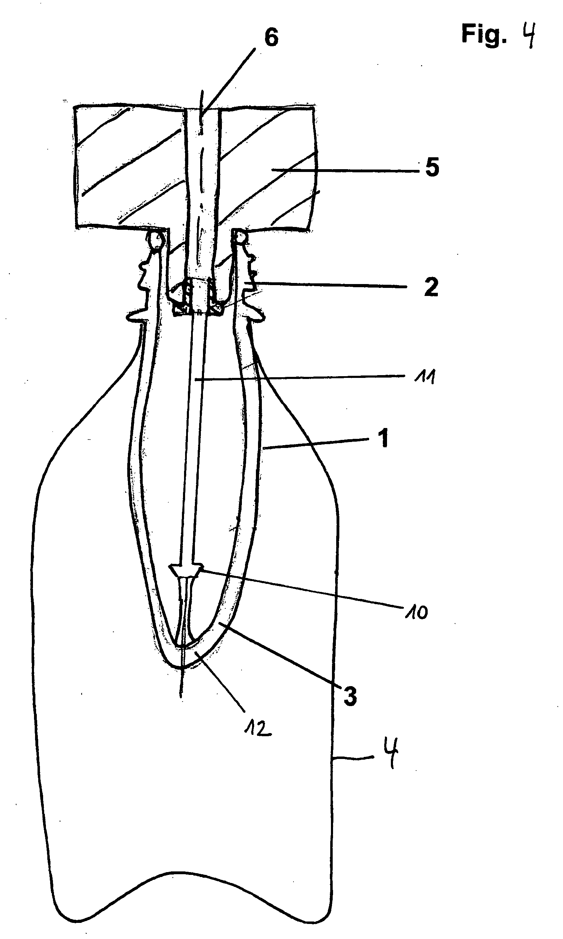

**Figur 4** zeigt einen Vorformling **1** in der Phase der Einleitung der Streckung durch einen Impulsstrahl, wie auch in Figur 2 dargestellt, aber unter Verwendung einer mitfahrenden Düse **10.** Der Vorformling **1** hat in der dargestellten Prozessphase eine erste sowohl axiale als auch radiale Streckung erfahren. Die Düse **10** ist auf einer verfahrbaren Lanze **11** angeordnet und kann während dem Füll- und Formprozess in axialer Richtung verfahren werden. Dadurch kann der axiale Streckvorgang gesteuert werden, indem je nach Material des Vorformlings **1** und der gewünschten Form des Behälters der Abstand zwischen der Düse **10** und dem Boden **12** des Vorformlings während des gesamten Form- und Füllprozesses oder nur zeitweise ein vorgegebener Abstand zwischen dem Boden **12** des Vorformlings **1** und der Düse **10** eingehalten wird. Die genaue Lage des Bodens **12** des Vorformlings **1** kann dabei induktiv, durch Ultraschall oder durch Erfassung des Wärmeprofils während des Form- und Füllprozesses bestimmt und die Position der Düse **10** entsprechend gesteuert werden.

Der Impulsübertrag kann in diesem Ausführungsbeispiel sehr zuverlässig erfolgen, da der Abstand zwischen der Düse **10** und dem Boden **12** des Vorformlings **1** gering ist. Der Strahl divergiert auf der kurzen Strecke bis zum Auftreffen auf den Boden **12** des Vorformlings **1** wenig. Durch geeignete Wahl des Strahldurchmessers kann der Impulsübertrag in einem definierten Bereich des Bodens **12** des Vorformlings **1** erfolgen und der Streckvorgang auch ohne Einsatz einer Reckstange kontrolliert eingeleitet werden.

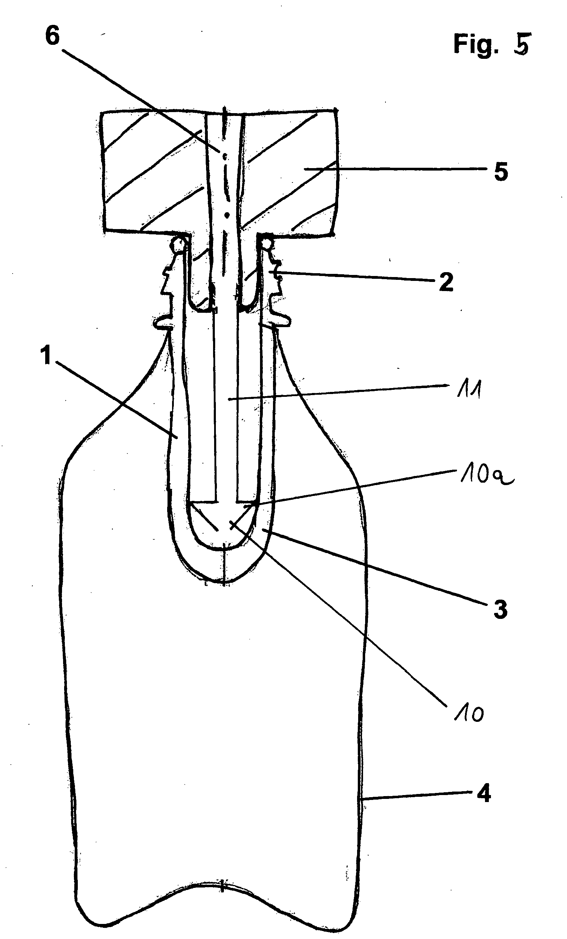

In **Figur 5** ist ein Vorformling **1** in einer Form **4** mit aufgesetztem Formkopf **5** vor Beginn des Form- und Füllvorgangs dargestellt. Im Unterschied zu der in Figur 1 dargestellten Ausführungsform ist die Düse **10** an einer verfahrbaren Lanze **11** befestigt und bis in die Nähe des Bodens **12** des Vorformlings **1** gefahren. Die Querschnittsfläche des Düsenkopfes **10a** entspricht annähernd der Querschnittsfläche des Innenraums des Vorformlings. Dadurch wird eine Abschirmung gegenüber dem über der Düse **10** liegenden Innenraum des Vorformlings **1** erreicht, so dass der Impuls durch das aus der Düse **10** auf dem Boden **12** des Vorformlings auftreffende Füllgut optimal übertragen wird und den Streckvorgang auslöst.

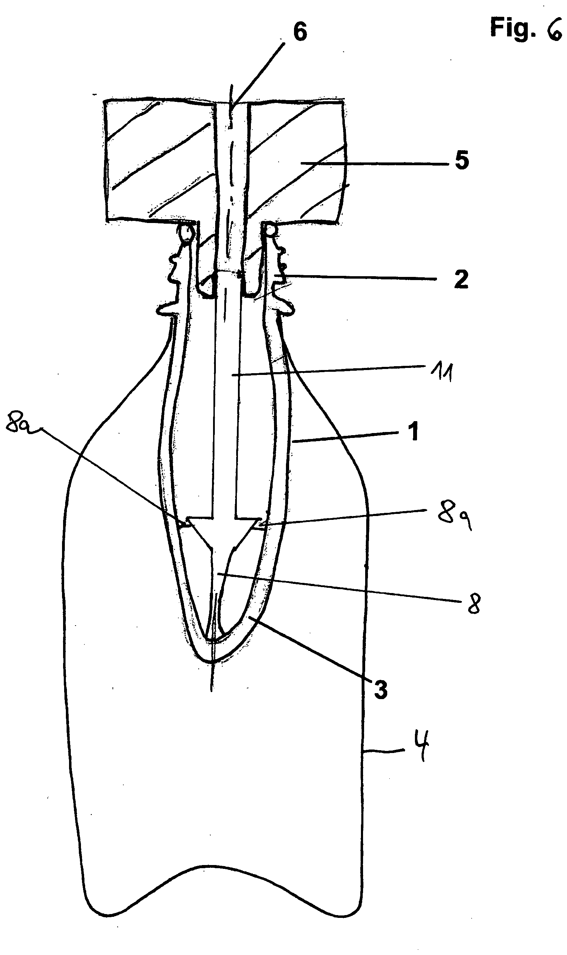

In **Figur 6** ist der Vorformling **1** aus Figur 5 nach Einleitung des Streckvorgangs zu sehen. Der Vorformling ist bereits sowohl in axialer als auch in radialer Richtung angestreckt. Damit die Düse **10** unter dem hohen Druck des ausströmenden Füllgutstrahls **8** nicht seitlich in radialer Richtung abgelenkt werden kann, verfügt die Düse **10** über Öffnungen für seitliche Stabilisierungsstrahlen **8a,** die die Düse gegenüber der seitlichen Wand des Vorformlings abstützen und die Düse mittig im sich umformenden Vorformling 1 halten.

## Patentansprüche

1. Verfahren zum Herstellen von mit einem flüssigen Füllgut (8) gefüllten Behältern aus Vorformlingen (1) aus einem thermoplastischen Material, wobei der jeweilige Vorformling (1) zumindest thermisch konditioniert und anschließend während einer Umformphase in einer Form (4) durch mittels einer Düse (10) unter Druck in den Vorformling (1) eingeleitetes flüssiges Füllgut (8) unter axialem und radialem Strecken in den Behälter umgeformt wird, **dadurch gekennzeichnet, dass** die axiale Streckung durch dem Vorformling (1) impulsartig zugeführtes Füllgut (8) eingeleitet wird, wobei unter impulsartiger Zuführung des Füllguts (8) eine Zuführung zu verstehen ist, die unmittelbar in den leeren Vorformling (1) erfolgt und deren Strahldurchmesser und Zuführgeschwindigkeit dazu geeignet sind, beim Auftreffen auf dem Vorformling (1) einen Impuls zu übertragen und damit den Streckvorgang auszulösen.

2. Verfahren nach Anspruch 1, **dadurch gekennzeichnet, dass** das Füllgut (8) in axialer Richtung des Vorformlings (1) zugeführt wird.

3. Verfahren nach Anspruch 1 oder 2, **dadurch gekennzeichnet, dass** das Füllgut (8) dem Vorformling (1) mit hoher Geschwindigkeit, vorzugsweise mit 30 bis 100 m/s, insbesondere mit 70 bis 90 m/s, zugeführt wird.

4. Verfahren nach einem der Ansprüche 1 bis 3, **dadurch gekennzeichnet, dass** das Füllgut (8) mit einem Strahldurchmesser von 3 bis 20 mm, vorzugsweise von 5 bis 14 mm und insbesondere von 10 mm zugeführt wird.

5. Verfahren nach einem der Ansprüche 1 bis 4, **dadurch gekennzeichnet, dass** das im Vorformling (1) impulsartig auftreffende Füllgut (8) eine Kraft von 350 bis 650 N, vorzugsweise von 400 bis 600 N, ausübt.

6. Verfahren nach einem der Ansprüche 1 bis 5, **dadurch gekennzeichnet, dass** die Zuführgeschwindigkeit des Füllguts (8) im Laufe des Füll- und Formvorgangs verändert wird.

7. Verfahren nach Anspruch 6, **dadurch gekennzeichnet, dass** die Zuführgeschwindigkeit des Füllguts (8) im Laufe des Füll- und Formvorgangs verringert wird.

8. Verfahren nach einem der Ansprüche 1 bis 7, **dadurch gekennzeichnet, dass** der Strahldurchmesser des Füllguts (8) im Laufe des Füll- und Formvorgangs verändert wird.

9. Verfahren nach einem der Ansprüche 1 bis 8, **dadurch gekennzeichnet, dass** die axiale Streckung wenigstens zeitweise durch eine von außen am Vorformling (1) angreifende Führungseinrichtung geführt wird.

10. Verfahren nach Anspruch 9, **dadurch gekennzeichnet, dass** die Führungseinrichtung den Vorformling (1) teilweise umschließend oder am Vorformling greifend angeordnet ist.

11. Verfahren nach Anspruch 9 oder 10, **dadurch gekennzeichnet, dass** die Führungseinrichtung die axiale Streckgeschwindigkeit mindestens zeitweise begrenzt.

12. Verfahren nach einem der Ansprüche 1 bis 11, **dadurch gekennzeichnet, dass** die Düse (10) während des Formvorgangs axial verfahren wird.

13. Verfahren nach einem der Ansprüche 1 bis 12, **dadurch gekennzeichnet, dass** die Lage des Bodens (12) des Vorformlings während des Formprozesses zumindest zeitweise erfasst wird, insbesondere induktiv, durch Ultraschall oder Aufnahme eines Wärmeprofil.

14. Verfahren nach Anspruch 12 oder 13, **dadurch gekennzeichnet, dass** der Abstand zwischen der Düse (10) und dem Boden (12) des Vorformlings (1) gesteuert wird.

15. Verfahren nach einem der Ansprüche 12 bis 14, **dadurch gekennzeichnet, dass** der Druck des Füllguts (8) oder der Druck in einer Abluftleitung oder einer Rückstromleitung gemessen und die Bewegung der Düse (10) während des Formvorgangs anhand der gemessenen Werte geregelt wird.

16. Verfahren nach einem der Ansprüche 1 bis 15, **dadurch gekennzeichnet, dass** die Temperatur des Füllguts (8) gesteuert wird, insbesondere dass das Füllgut beheizt wird.

17. Verfahren nach einem der Ansprüche 1 bis 16, **dadurch gekennzeichnet, dass** die Düse (10) während des Formvorgangs wenigstens zeitweise radial abgestützt wird, insbesondere durch aus der Düse (10) in radialer Richtung austretende Füllgutstrahlen (8a).

18. Verfahren nach einem der Ansprüche 1 bis 14, **dadurch gekennzeichnet, dass** die Querschnittsfläche des Kopfes (10a) der Düse (10) annähernd der inneren Querschnittsfläche des Vorformlings (1) entspricht,

## Claims

1. A method for producing containers filled with a liquid filling material (8) from preforms (1) made of a thermoplastic material, wherein the respective preform (1) is at least thermally conditioned and is subsequently shaped to form the container in a mould (4) during a shaping phase by axial and radial stretching by means of liquid filling material (8) introduced under pressure into the preform (1) by means of a nozzle (10), **characterised in that** the axial stretching is initiated by filling material (8) supplied to the preform (1) in a pulsed manner, wherein supply of the filling material (8) in a pulsed manner is to be understood as a supply, which takes place directly into the empty preform (1) and the jet diameter and supply speed of which are suitable to transfer an impulse when striking the preform (1) and to thus trigger the stretching process.

2. The method according to Claim 1, **characterised in that** the filling material (8) is supplied in the axial direction of the preform (1).

3. The method according to Claim 1 or 2, **characterised in that** the filling material (8) is supplied to the preform (1) at a high speed, preferably at 30 to 100 m/s, in particular at 70 to 90 m/s.

4. The method according to any one of Claims 1 to 3, **characterised in that** the filling material (8) is supplied with a jet diameter of 3 to 20 mm, preferably of 5 to 14 mm, and in particular of 10 mm.

5. The method according to any one of Claims 1 to 4, **characterised in that** the filling material (8) striking the preform (1) in a pulsed manner exerts a force of 350 to 650 N, preferably of 400 to 600 N.

6. The method according to any one of Claims 1 to 5, **characterised in that** the supply speed of the filling material (8) is changed in the course of the filling and moulding process.

7. The method according to Claim 6, **characterised in that** the supply speed of the filling material (8) is reduced in the course of the filling and moulding process.

8. The method according to any one of Claims 1 to 7, **characterised in that** the jet diameter of the filling material (8) is changed in the course of the filling and moulding process.

9. The method according to any one of Claims 1 to 8, **characterised in that** the axial stretching is at least temporarily guided through a guide means engaging with the perform (1) from the outside.

10. The method according to Claim 9, **characterised in that** the guide means is arranged so as to partially enclose the perform (1) or so as to engage with the preform.

11. The method according to Claim 9 or 10, **characterised in that** the guide means at least temporarily limits the axial stretching speed.

12. The method according to any one of Claims 1 to 11, **characterised in that** the nozzle (10) is axially displaced during the moulding process.

13. The method according to any one of Claims 1 to 12, **characterised in that** the position of the base (12) of the preform is at least partially detected during the moulding process, in particular inductively, by means of ultrasound or by recording a thermal profile.

14. The method according to Claim 12 or 13, **characterised in that** the distance between the nozzle (10) and the base (12) of the preform (1) is controlled.

15. The method according to any one of Claims 12 to 14, **characterised in that** the pressure of the filling material (8) or the pressure in an exhaust air line or a return flow line is measured and the movement of the nozzle (10) during the moulding process is regulated by means of the measured values.

16. The method according to any one of Claims 1 to 15, **characterised in that** the temperature of the filling material (8) is controlled, in particular that the filling material is heated.

17. The method according to any one of Claims 1 to 16, **characterised in that** the nozzle (10) is at least temporarily radially supported during the moulding process, in particular by filling material jets (8a) escaping from the nozzle (10) in the radial direction.

18. The method according to any one of Claims 1 to 14, **characterised in that** the cross-sectional surface of the head (10a) of the nozzle (10) approximately corresponds to the inner cross-sectional surface of the preform (1).

## Revendications

1. Procédé de fabrication, à partir de préformes (1) en un matériau thermoplastique, de récipients remplis d'un produit de remplissage liquide (8), la préforme (1) respective étant au moins thermiquement conditionnée puis, au cours d'une phase de formage dans un moule (4), transformée en récipient par extension axiale et radiale à l'aide d'un produit de remplissage liquide (8) introduit sous pression dans la préforme (1) au moyen d'une buse (10), **caractérisé en ce que** l'extension axiale est obtenue par l'introduction pulsée du produit de remplissage (8) dans la préforme (1), la notion d'introduction pulsée du produit de remplissage (8) désignant une introduction dans la préforme (1) encore vide sous forme d'un jet dont le diamètre et la vitesse de projection sur le fond de la préforme (1) sont propres à transmettre une quantité de mouvement et déclencher le processus d'extension.

2. Procédé selon la revendication 1, **caractérisé en ce que** le produit de remplissage (8) est introduit en sens axial de la préforme (1).

3. Procédé selon la revendication 1 ou 2, **caractérisé en ce que** le produit de remplissage (8) est introduit dans la préforme (1) à une vitesse élevée, de préférence une vitesse de 30 à 100 m/s, notamment une vitesse de 70 à 90 m/s.

4. Procédé selon l'une des revendications 1 à 3, **caractérisé en ce que** le produit de remplissage (8) est introduit avec un diamètre de jet de 3 à 20 mm, de préférence de 5 à 14 mm et notamment de 10 mm.

5. Procédé selon l'une des revendications 1 à 4, **caractérisé en ce que** l'impact du produit de remplissage (8) pénétrant par introduction pulsée dans la préforme (1) exerce une force de 350 à 650 N, de préférence de 400 à 600 N.

6. Procédé selon l'une des revendications 1 à 5, **caractérisé en ce que** la vitesse d'introduction du produit de remplissage (8) est modifiée au cours du processus de remplissage et de formage.

7. Procédé selon la revendication 6, **caractérisé en ce que** la vitesse d'introduction du produit de remplissage (8) est réduite au cours du processus de remplissage et de formage.

8. Procédé selon l'une des revendications 1 à 7, **caractérisé en ce que** le diamètre du jet du produit de remplissage (8) est modifiée au cours du processus de remplissage et de formage

9. Procédé selon l'une des revendications 1 à 8, **caractérisé en ce que** l'extension axiale est, temporairement au moins, guidée par un dispositif de guidage appliqué à l'extérieur de la préforme (1).

10. Procédé selon la revendication 9, **caractérisé en ce que** le dispositif de guidage entoure partiellement la préforme (1) ou est agencé de façon à entrer en contact avec celle-ci.

11. Procédé selon la revendication 9 ou 10, **caractérisé en ce que** le dispositif de guidage limite temporairement au moins la vitesse d'extension axiale

12. Procédé selon l'une des revendications 1 à 11, **caractérisé en ce que** la buse (10) est déplacée axialement pendant le processus de formage.

13. Procédé selon l'une des revendications 1 à 12, **caractérisé en ce que** la position du fond (12) de la préforme pendant le processus de formage est, temporairement au moins, détectée, notamment par induction, par ultrasons ou par enregistrement d'un profil thermique.

14. Procédé selon la revendication 12 ou 13, **caractérisé en ce que** la distance entre la buse (10) et le fond (12) de la préforme (1) est commandée.

15. Procédé selon l'une des revendications 12 à 14, **caractérisé en ce que** la pression du produit de remplissage (8) ou la pression dans une conduite d'évacuation d'air ou dans une conduite de retour est mesurée et le déplacement de la buse (10) pendant le processus de formage réglé sur la base des valeurs mesurées.

16. Procédé selon l'une des revendications 1 à 15, **caractérisé en ce que** la température du produit de remplissage (8) est commandée, notamment **en ce que** le produit de remplissage est chauffé.

17. Procédé selon l'une des revendications 1 à 16, **caractérisé en ce que** la buse (10) est temporairement au moins maintenue radialement pendant le processus de formage, notamment par des jets de produit de remplissage (8a) s'échappant radialement de la buse (10).

18. Procédé selon l'une des revendications 1 à 14, **caractérisé en ce que** la surface de la section de la tête (10a) de la buse (10) correspond approximativement à la surface de la section de la préforme (1).
